(19) Europäisches Patentamt
European Patent Office
Office européen des brevets

(11) **EP 4 459 395 A1**

(12) **EUROPEAN PATENT APPLICATION**
published in accordance with Art. 153(4) EPC

(43) Date of publication:
06.11.2024 Bulletin 2024/45

(21) Application number: 22915763.1

(22) Date of filing: 16.12.2022

(51) International Patent Classification (IPC):
*G05B 19/404* (2006.01)    *B23B 29/04* (2006.01)
*B23B 29/24* (2006.01)    *B23Q 15/14* (2006.01)
*B23Q 16/02* (2006.01)    *B23Q 17/22* (2006.01)

(52) Cooperative Patent Classification (CPC):
B23B 29/04; B23B 29/24; B23Q 15/14;
B23Q 16/02; B23Q 17/22; G05B 19/404

(86) International application number:
PCT/JP2022/046334

(87) International publication number:
WO 2023/127539 (06.07.2023 Gazette 2023/27)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 27.12.2021 JP 2021212203

(71) Applicant: Nakamura-Tome Precision Industry
Co., Ltd.
Ishikawa 920-2195 (JP)

(72) Inventors:
• KAKUMOTO Masahiko
Hakusan-shi, Ishikawa 920-2195 (JP)
• YAMAMOTO Satoru
Hakusan-shi, Ishikawa 920-2195 (JP)

(74) Representative: Wunderlich & Heim
Patentanwälte
PartG mbB
Irmgardstraße 3
81479 München (DE)

(54) **DEVICE FOR AUTOMATICALLY CORRECTING BLADE EDGE POSITION IN MACHINE TOOL**

(57)    An object is to provide an automatic correction device for a blade edge position capable of automatically correcting a deviation of a tool blade edge from a reference position due to an inclination amount of the tool blade edge and an orientation angle when a turning tool is mounted on a tool main spindle in an NC-controlled machine tool. The automatic correction device for a blade edge position at a time of a turning tool being mounted on a tool main spindle in a machine tool includes tool clamp surface inclination amount acquisition means, tool shaft rotation phase angle acquisition means, and tool protrusion amount acquisition means at a time of mounting the turning tool on the tool main spindle, and includes first correction arithmetic processing means for a blade edge position based on a tool shaft rotation phase angle with respect to an inclination amount of a tool clamp surface and a tool protrusion amount obtained by the acquisition means. Selected Drawing FIG. 1

EP 4 459 395 A1

# FIG.1

S1 — START

S2 — TOOL CLAMP COMMAND

N (ROTARY TOOL) ⟶

Y (TURNING TOOL)

S3 — ACQUIRE TOOL SHAFT ROTATION PHASE ANGLE

S4 — ACQUIRE TOOL PROTRUSION AMOUNT X/Z/Y

S5 — ACQUIRE TURNING B-AXIS ANGLE

S6 — ACQUIRE INCLINATION AMOUNT (ANGLE) PARAMETER OF TOOL CLAMP SURFACE

S7 — CORRECTION AMOUNT ARITHMETIC PROCESSING

S8 — POSITION CORRECTION PROCESSING

S9 — END

**Description**

TECHNICAL FIELD

In the field of NC-controlled machine tools such as composite processing machines, a tool main spindle on which both a rotary tool and a fixed tool can be mounted (clamped) is used. When a turning tool is mounted on the tool main spindle, the turning tool is set and fixed to a predetermined tool orientation angle (tool shaft rotation phase angle) and turning processing is executed, by an NC control program.

BACKGROUND ART

For example, Patent Document 1 discloses an art that detects whether a tool mounted on a tool main spindle is a turning tool, or a milling tool by an infrared sensor, executes rotation stop when it is detected that the tool is a turning tool, and corrects a displacement amount generated in the main spindle by a thrust that is applied to a piston clutch.

The art disclosed in the publication detects a blade edge by the infrared sensor, and does not perform correction control on an NC program.

RELATED-ART DOCUMENT

PATENT DOCUMENT

Patent Document 1: JP-A-2021-109274

SUMMARY OF THE INVENTION

TECHNICAL PROBLEM

An object of the present invention is to provide an automatic correction device for a blade edge position that can automatically correct a deviation of a tool blade edge of a tool from a reference position due to an inclination amount of the blade edge of the tool and an orientation angle when a turning tool is mounted on a tool main spindle in an NC-controlled machine tool.

SOLUTION TO PROBLEM

An automatic correction device for a blade edge position according to the invention is an automatic correction device for a blade edge position at a time of a turning tool being mounted on a tool main spindle in a machine tool, including tool clamp surface inclination amount acquisition means, tool shaft rotation phase angle acquisition means, and tool protrusion amount acquisition means at a time of mounting a turning tool on a tool main spindle, in which the automatic correction device includes first correction arithmetic processing means for a blade edge position based on a tool shaft rotation phase angle with respect to an inclination amount of a tool clamp surface and a tool protrusion amount obtained by the acquisition means.

The tool clamp surface inclination amount herein refers to an inclination deviated by a predetermined angle with respect to an angle orthogonal to a mounting surface (clamp surface) where the turning tool is mounted on the tool main spindle.

When the blade edge of the tool has an inclination with respect to a mounting axis direction of the tool main spindle, a deviation from the reference position set to the processing program is generated in the position of the blade edge due to the protrusion amount of the blade edge and the tool shaft rotation phase angle due to indexing when the blade edge is oriented to a position in contact with a workpiece to be processed.

Thus, in the invention, the first correction arithmetic processing means is included so as to be able to automatically correct the deviation amount at a time of execution of turning processing.

The deviation amount of the blade edge position from the reference position also changes according to a turning angle of the tool main spindle.

Thus, in the invention, it is preferable to further have turning angle acquisition means for the tool main spindle and have second correction arithmetic processing means for a blade edge position based on a turning angle of the tool main spindle obtained by the turning angle acquisition means.

When the tool main spindle does not turn, only first correction arithmetic processing is executed, and when turning of the tool main spindle is involved, first and second correction arithmetic processing is executed.

Here, the tool clamp surface inclination amount acquisition means has one or more of an X-axis direction, a Y-axis direction, and a Z-axis direction.

ADVANTAGEOUS EFFECTS OF INVENTION

In the invention, a deviation amount of the blade edge position from a reference position at a time of orientation that is generated due to the inclination amount of the tool clamp surface and the tool protrusion amount is automatically corrected in an NC device.

BRIEF DESCRIPTION OF THE DRAWINGS

FIG. 1 illustrates an example of a flowchart of machine processing using an automatic correction device for a blade edge position according to the invention.
FIG. 2 illustrates an example of setting an inclination amount (angle) of a tool clamp surface.
FIG. 3 illustrates a state in which a tool (turning tool) is mounted on a tool main spindle.
FIG. 4A illustrates an explanatory diagram of a rotation radius of a tool when an inclination amount $\theta$ is plus, and FIG. 4B illustrates an explanatory diagram of a rotation radius of the tool when the inclination amount $\theta$ is minus.
FIG. 5A illustrates a correction amount of a deviation of a blade edge position from a reference when the inclination amount $\theta$ is plus, and FIG. 5B illustrates a correction amount of the deviation when the inclination amount $\theta$ is minus.
FIG. 6 illustrates an explanatory view of turning of the tool main spindle.

DESCRIPTION OF EMBODIMENTS

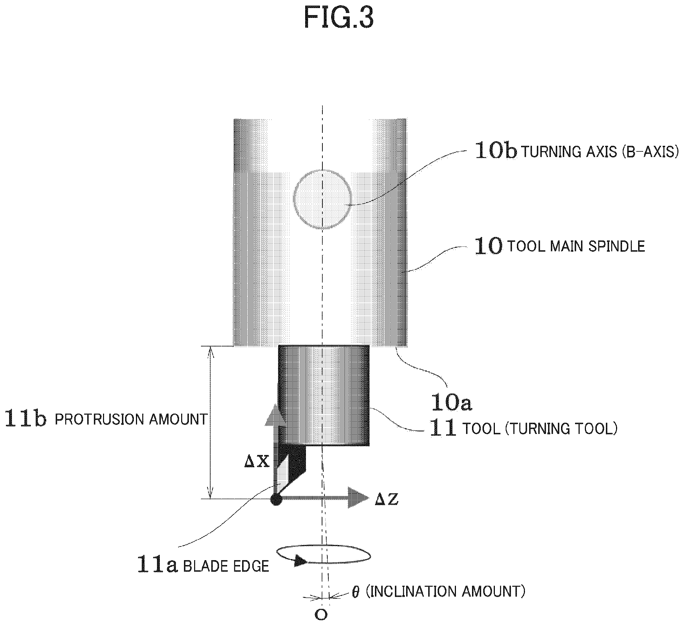

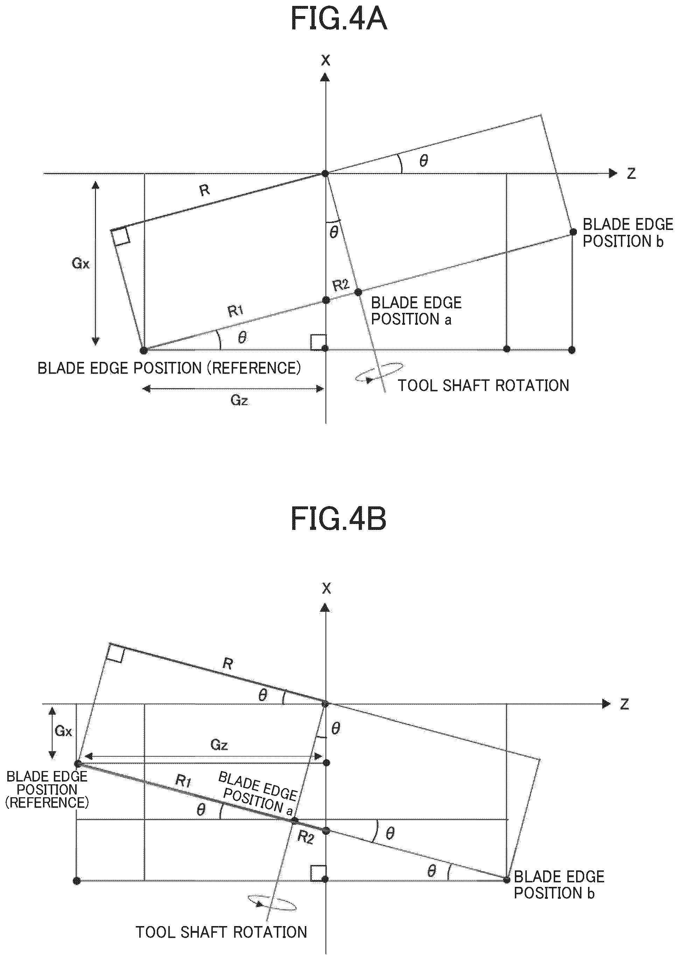

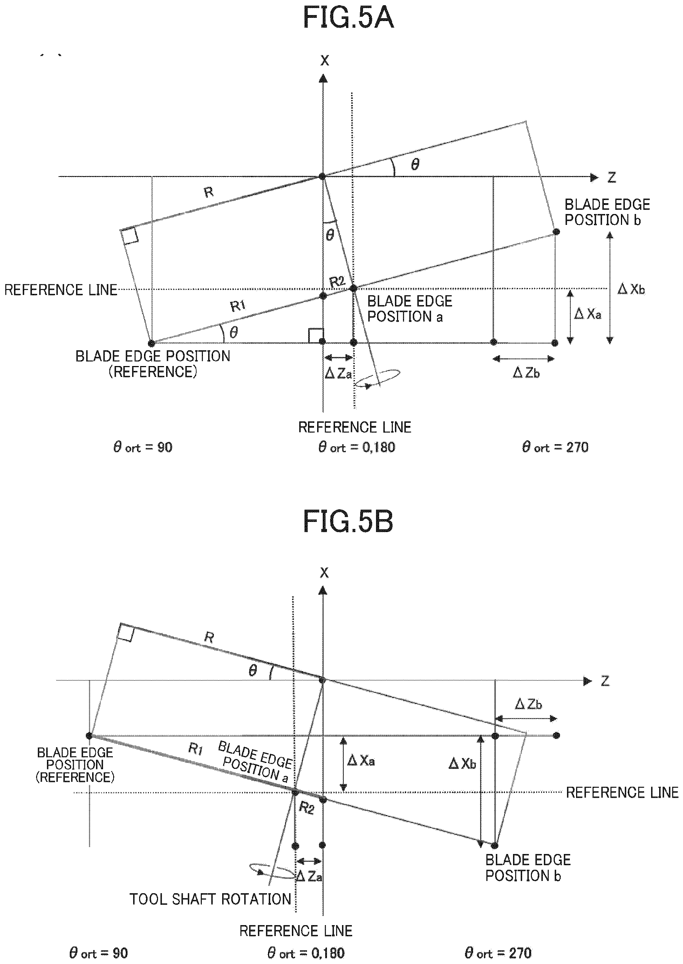

An automatic correction device for a blade edge position according to the invention, and an automatic correction method using the same will be described hereinafter based on the drawings, but the invention is not limited to this.
First, a state in which a tool (turning tool) 11 is mounted (clamped) on a tool main spindle 10 under rotational control will be described based on FIG. 3.
The present embodiment is an example of the tool main spindle 10 in which a turning axis 10b is subjected to turning control around a B-axis, a tool 11 mounted on this tool main spindle 10 is provided with a blade edge 11a for turning a workpiece during turning processing, and has a predetermined protrusion amount 11b from a mounting surface (clamp surface) 10a of the tool main spindle 10.
The protrusion amount is incorporated on a program as a tool offset value, and is selectively controlled therefrom.
Further, the blade edge 11a is disposed to be offset by a predetermined amount, and is disposed to be inclined by a predetermined inclination amount (angle), with respect to an axial center line O of the tool main spindle for a reason of turning quality or the like at a time of turning processing of the workpiece.
Accordingly, when the blade edge 11a of the tool 11 is rotated and indexed with respect to the workpiece at the time of turning processing, a deviation from a reference position occurs at a position of the blade edge 11a.
A content thereof will be described in FIG. 4 and FIG. 5.
FIG. 4 illustrates explanatory diagrams for obtaining a rotation radius associated with orientation of the tool 11, FIG. 4A is explanation of a case where an inclination amount (angle) $\theta$ is plus, and FIG. 4B is explanation of the case where it is minus.
Reference signs illustrated in FIG. 4 are as follows.

R: rotation radius of blade edge
$\theta$: Inclination amount (angle) in XZ plane
Gx: X-axis direction protrusion amount
Gz: Z-axis direction protrusion amount

When defined in this manner, there are relationships shown in Expressions (1) to (3) below.

$$R = R_1 + R_2 \qquad \cdots (1)$$

$$R_1 = \frac{Gz}{\cos\theta} \qquad \cdots (2)$$

$$\mathrm{R}_2 = [Gx - Gz \tan \theta] \cdot \sin \theta \qquad \cdots (3)$$

The rotation radius R of the blade edge is obtained by Expression (1), $R_1$ is obtained by expression (2), and $R_2$ is obtained by expression (3).

Subsequently, correction amounts of deviations when the blade edge position is indexed from the reference position to, for example, blade edge positions "a" and "b" respectively by rotation of the tool will be described based on FIG. 5.

FIG. 5A illustrates a case in which $\theta$ is plus, and FIG. 5B illustrates a case in which $\theta$ is minus.

When a tool shaft rotation phase angle is $(\theta_{ORT})$, a correction amount $\Delta X$ in an X-axis direction due to this is obtained by Expression (4) below from a relationship illustrated in FIG. 5.

$$\Delta \mathrm{X} = R \sin \theta - R \sin \theta \cdot \sin \theta_{ort} \qquad \cdots (4)$$

Further, a correction amount $\Delta Z$ in a Z-axis direction is obtained by Expression (5) below.

$$\Delta Z = R_2 \cos \theta - R_2 \cos \theta \cdot \sin \theta_{ort} \qquad \cdots (5)$$

Note that a correction amount $\Delta Y$ in a Y-axis direction can also be obtained similarly although not illustrated.

Arithmetic processing based on the expressions shown in Expressions (1) to (5) described above is referred to as first correction arithmetic processing.

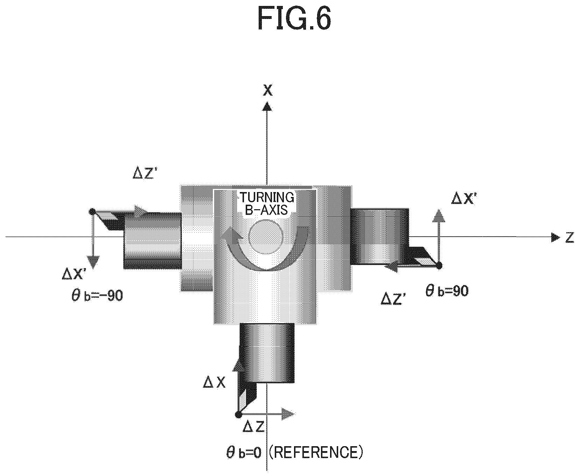

FIG. 6 is a case in which turning of the tool main spindle is controlled around the B-axis in the present embodiment, and when a turning B-axis angle is $\theta b$, a correction amount $\Delta X'$ in the X-axis direction is obtained by Expression (6) below.

$$\Delta \mathrm{X}' = \Delta X \cos \theta_b + \Delta Z \sin \theta_b \qquad \cdots (6)$$

Further, a correction amount $\Delta Z'$ in the Z-axis direction is obtained by Expression (7) below.

$$\Delta \mathrm{Z}' = -\Delta X \sin \theta_b + \Delta Z \cos \theta_b \qquad \cdots (7)$$

Arithmetic processing based on Expressions (6) and (7) described above is referred to as second correction arithmetic processing.

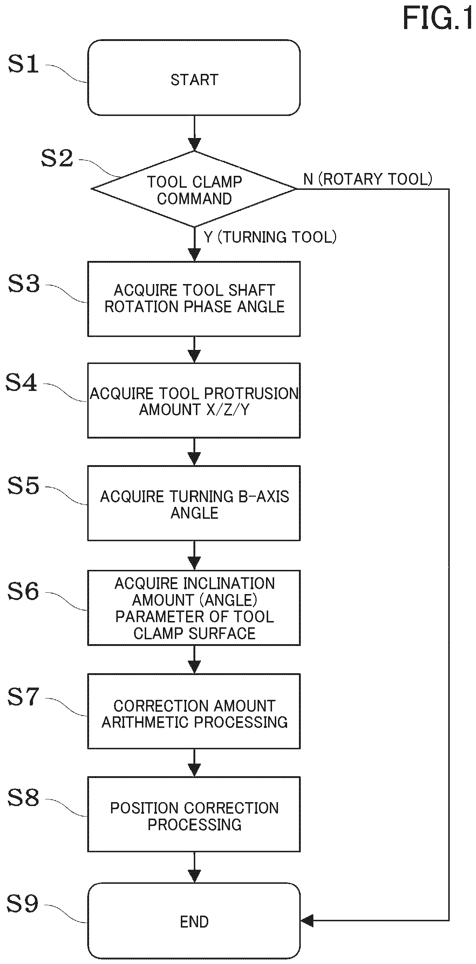

FIG. 1 illustrates an example of a flowchart of turning processing using an automatic correction device for a blade edge position according to the invention.

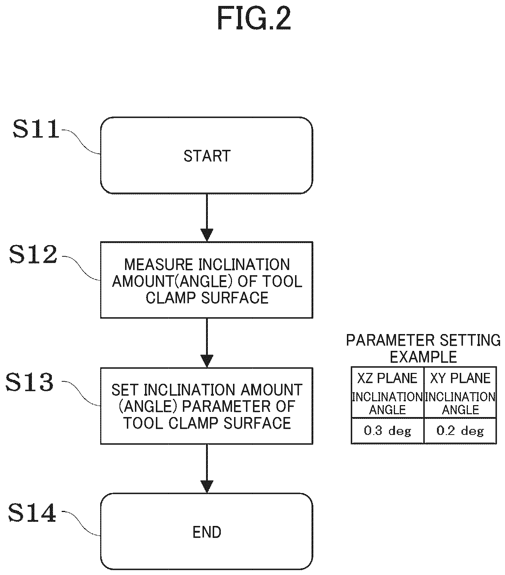

In this case, as illustrated in FIG. 2, it is preferable to set a parameter of an inclination amount (angle) of a tool clamp surface as preparation in advance.

When a start designation (S11) is issued in an NC device, the inclination amount of the tool clamp surface is automatically measured (S12), a parameter of the inclination amount of the tool clamp surface is set (S13) to complete the process (S14).

When a start command (S1) is issued in the NC device, a tool is mounted on the tool main spindle based on a clamp command (S2).

When the tool clamped at this point of time is a rotary tool, a correction processing for the blade edge position ends, and processing by the rotary tool is executed.

Further, when the tool is a turning tool, the process proceeds to a next step.

An orientation angle is acquired by tool shaft rotation phase angle acquisition means (S3), and then protrusion amounts in the X-axis, Z-axis and Y-axis are acquired by tool protrusion amount acquisition means (S4).

Subsequently, the turning B-axis angle is acquired by turning angle acquisition means for tool main spindle as necessary (S5).

Subsequently, a parameter of the inclination amount of the tool clamp surface described in FIG. 2 is acquired (S6).

Based on data acquired from these, the correction amount is arithmetically processed by Expressions (1) to (7) described above (S7).

Based on an arithmetic processing result, the deviation amount of the blade edge position from the reference position is corrected (S8) to complete the process.

Turning processing is executed while repeating this.

The invention can be applied to various machine tools in which rotary tools such as milling tools, fixed tools such as turning tools, or the like are selectively mounted on tool main spindles such as composite machines.

The present embodiment shows the example of the tool main spindle that is positionally controlled in the X-axis direction, Z-axis direction, and the Y-axis direction with a workpiece held on the main spindle under rotational control, and the tool main spindle is subjected to turning control around the B-axis.

The main spindle may be a twin-main-spindle facing lathe in which the main spindles are disposed to face each other.

INDUSTRIAL APPLICABILITY

The invention can be used in various machine tools since the deviation amount of the blade edge position from the reference position can be automatically corrected in the NC device.

REFERENCE SIGNS LIST

10      tool main spindle
10b     turning axis (B-axis)
11      tool (turning tool)
11a     blade edge
11b     protrusion amount

**Claims**

1. An automatic correction device for correcting a position of a blade edge of a turning tool at a time of the turning tool being mounted on a tool main spindle in a machine tool, comprising:

   tool clamp surface inclination amount acquisition means; tool shaft rotation phase angle acquisition means; and tool protrusion amount acquisition means at a time of mounting a turning tool on a tool main spindle, wherein the automatic correction device includes first correction arithmetic processing means for a blade edge position based on a tool shaft rotation phase angle with respect to an inclination amount of a tool clamp surface and a tool protrusion amount obtained by the respective acquisition means.

2. The automatic correction device for a blade edge position according to claim 1, further comprising:

   turning angle acquisition means for the tool main spindle, and
   second correction arithmetic processing means for a blade edge position based on a turning angle of the tool main spindle obtained by the turning angle acquisition means.

3. The automatic correction device for a blade edge position according to claim 1 or 2, wherein the tool clamp surface inclination amount acquisition means has one or more of an X-axis direction, a Y-axis direction, and a Z-axis direction.

# FIG.1

S1 — START

S2 — TOOL CLAMP COMMAND
N (ROTARY TOOL)
Y (TURNING TOOL)

S3 — ACQUIRE TOOL SHAFT ROTATION PHASE ANGLE

S4 — ACQUIRE TOOL PROTRUSION AMOUNT X/Z/Y

S5 — ACQUIRE TURNING B-AXIS ANGLE

S6 — ACQUIRE INCLINATION AMOUNT (ANGLE) PARAMETER OF TOOL CLAMP SURFACE

S7 — CORRECTION AMOUNT ARITHMETIC PROCESSING

S8 — POSITION CORRECTION PROCESSING

S9 — END

# FIG.2

S11 — **START**

↓

S12 — MEASURE INCLINATION AMOUNT(ANGLE) OF TOOL CLAMP SURFACE

↓

PARAMETER SETTING EXAMPLE

| XZ PLANE INCLINATION ANGLE | XY PLANE INCLINATION ANGLE |
|---|---|
| 0.3 deg | 0.2 deg |

S13 — SET INCLINATION AMOUNT (ANGLE) PARAMETER OF TOOL CLAMP SURFACE

↓

S14 — **END**

# FIG.3

10b TURNING AXIS (B-AXIS)

10 TOOL MAIN SPINDLE

10a
11 TOOL (TURNING TOOL)

11b PROTRUSION AMOUNT

$\Delta X$

$\Delta Z$

11a BLADE EDGE

$\theta$ (INCLINATION AMOUNT)

O

# FIG.4A

# FIG.4B

# FIG.5A

# FIG.5B

# FIG.6

## INTERNATIONAL SEARCH REPORT

| International application No. |
|---|
| **PCT/JP2022/046334** |

**A.    CLASSIFICATION OF SUBJECT MATTER**

*G05B 19/404*(2006.01)i; *B23B 29/04*(2006.01)i; *B23B 29/24*(2006.01)i; *B23Q 15/14*(2006.01)i; *B23Q 16/02*(2006.01)i;
*B23Q 17/22*(2006.01)i

FI:    G05B19/404 F; B23B29/04 A; B23B29/24 A; B23Q15/14 Z; B23Q16/02 C; B23Q17/22 Z

According to International Patent Classification (IPC) or to both national classification and IPC

**B.    FIELDS SEARCHED**

Minimum documentation searched (classification system followed by classification symbols)

G05B19/18-19/416; G05B19/42-19/46; B23B27/00-29/34; B23Q15/00-23/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| A | JP 2018-30224 A (NT ENGINEERING KABUSHIKI KISHA) 01 March 2018 (2018-03-01) | 1-3 |
| A | Microfilm of the specification and drawings annexed to the request of Japanese Utility Model Application No. 126070/1979 (Laid-open No. 42806/1981) (MITSUBISHI KINZOKU KABUSHIKI KAISHA) 18 April 1981 (1981-04-18) | 1-3 |
| A | JP 2018-140470 A (NIIGATA MACHINE TECHNO CO LTD) 13 September 2018 (2018-09-13) | 1-3 |
| A | JP 2019-13996 A (NAKAMURA TOME PRECISION IND) 31 January 2019 (2019-01-31) | 1-3 |
| A | JP 2002-187003 A (MORI SEIKI CO LTD) 02 July 2002 (2002-07-02) | 1-3 |
| A | JP 2021-11011 A (JTEKT CORP) 04 February 2021 (2021-02-04) | 1-3 |
| A | JP 5766895 B1 (YAMAZAKI MAZAK CORPORATION) 19 August 2015 (2015-08-19) | 1-3 |

☐ Further documents are listed in the continuation of Box C.         ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **16 February 2023** | **28 February 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

INTERNATIONAL SEARCH REPORT

**Information on patent family members**

International application No.

**PCT/JP2022/046334**

| Patent document cited in search report | | | Publication date (day/month/year) | Patent family member(s) | | | Publication date (day/month/year) |
|---|---|---|---|---|---|---|---|
| JP | 2018-30224 | A | 01 March 2018 | WO | 2018/038276 | A1 | |
| | | | | CN | 109862980 | A | |
| JP | 56-42806 | U1 | 18 April 1981 | (Family: none) | | | |
| JP | 2018-140470 | A | 13 September 2018 | (Family: none) | | | |
| JP | 2019-13996 | A | 31 January 2019 | (Family: none) | | | |
| JP | 2002-187003 | A | 02 July 2002 | US | 2002/0117021 | A1 | |
| | | | | EP | 1217481 | A1 | |
| JP | 2021-11011 | A | 04 February 2021 | US | 2021/0008653 | A1 | |
| | | | | DE | 102020117709 | A1 | |
| | | | | CN | 112191949 | A | |
| JP | 5766895 | B1 | 19 August 2015 | US | 2016/0089760 | A1 | |
| | | | | WO | 2016/009502 | A1 | |
| | | | | EP | 3001264 | A1 | |
| | | | | CN | 105378570 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021109274 A